# FASCICULE DE BREVET EUROPEEN

(11) **EP 1 604 420 B1**
(45) Date de publication et mention de la délivrance du brevet: **09.01.2013**
(21) Numéro de dépôt: 04720904.4
(22) Date de dépôt: 16.03.2004
(51) Int. Cl.: H01M 8/10, H01M 8/24

(54) **PILE A COMBUSTIBLE PLANAIRE ET PROCEDE DE FABRICATION D UNE TELLE PILE**
PLANARE BRENNSTOFFZELLE UND VERFAHREN ZU DEREN HERSTELLUNG
PLANAR FUEL CELL AND METHOD FOR THE PRODUCTION THEREOF

(30) Priorité: 18.03.2003 FR 0350051
(43) Date de publication de la demande: 14.12.2005
(73) Titulaire: Commissariat à l'Énergie Atomique et aux Énergies Alternatives, 75015 Paris (FR)
(72) Inventeur: MOSDALE, Renaut, F-38640 CLAIX (FR)
(74) Mandataire: Poulin, Gérard
(86) Numéro de dépôt international: PCT/FR2004/050109
(87) Numéro de publication internationale: WO 2004/086548

(56) Documents cités:
- EP-A- 0 482 783
- WO-A-01/06586
- US-A- 5 989 741

## Description

### DOMAINE TECHNIQUE

L'invention concerne une pile à combustible planaire et le procédé de fabrication d'une telle pile.

Le domaine de l'invention est celui des piles à combustible planaires, par exemple à électrolyte polymère solide, et de leur application à la génération de puissances électriques de quelques centaines de milliwatts à quelques centaines de kilowatts pour des applications stationnaires, par exemple pour des centrales ou des chaudières, des applications de transports, par exemple pour des véhicules terrestres, maritimes, ou aériens, et des applications portables et transportables, par exemple pour des téléphones ou des ordinateurs portables.

### ETAT DE LA TECHNIQUE ANTERIEURE

A l'heure actuelle, la plupart des piles à combustible sont bâties sur la base d'un ensemble « sandwich » composé de deux électrodes disposées de part et d'autre d'un électrolyte. Les électrodes sont généralement constituées d'une couche de diffusion sur laquelle est déposée une couche active (couche catalytique). Un réactif différent arrive sur chaque surface extérieure des deux électrodes, à savoir un carburant et un comburant. Ceux-ci réagissent chimiquement par l'intermédiaire de l'élément électrolytique, de sorte qu'il est possible de prélever une tension électrique aux bornes des deux électrodes.

Si le carburant est l'hydrogène et le comburant l'oxygène, une oxydation de l'hydrogène a lieu à l'anode, tandis qu'à la cathode se produit la réduction de l'oxygène en eau.

Chaque électrode est donc le siège d'une réaction électrochimique, la tension résultante, différence de potentiel entre ces deux réactions, est généralement d'environ 1 volt (à courant nul) puisque l'on réalise à l'anode l'oxydation de l'hydrogène en protons et à la cathode la réduction de l'oxygène en eau. Cette faible tension constitue le principal handicap de telles piles par rapport aux batteries classiques, dont la tension élémentaire peut monter jusqu'à 4 volts (exemple du couple Li/C). Pour remédier à ce problème, il est d'usage d'empiler un grand nombre de tels éléments suivant une technologie dite « filtre-presse ». Mais cette technologie présente un problème de mauvaise distribution des gaz dans chaque cellule et de perte d'étanchéité dans l'empilement, aggravés par la multiplication du nombre d'éléments empilés. De plus, les plaques bipolaires séparant deux cellules élémentaires doivent répondre aux critères physiques et chimiques spécifiques suivants :
- très bonne conductivité électronique,
- imperméabilité aux gaz,
- faible masse,
- résistance chimique à l'eau, à l'oxygène et à l'hydrogène,
- faible coût matière,
- bonne usinabilité.

Aucune technologie de plaque bipolaire ne répond aujourd'hui à de tels critères, qui nécessitent l'emploi d'une technique d'usinage onéreuse, ou l'emploi de matériaux très coûteux. De plus, ce type d'empilement est généralement de géométrie parallélépipédique, peu propice à une intégration.

Afin de pallier de tels inconvénients, le document référencé [1] en fin de description décrit une nouvelle géométrie de pile à combustible permettant d'associer sur une même membrane plusieurs paires d'électrodes, et d'augmenter artificiellement la tension élémentaire. Cette association se fait par un empilement de matériaux décalés les uns par rapport aux autres. Elle nécessite l'utilisation de plaques distributrices de gaz électroniquement isolantes.

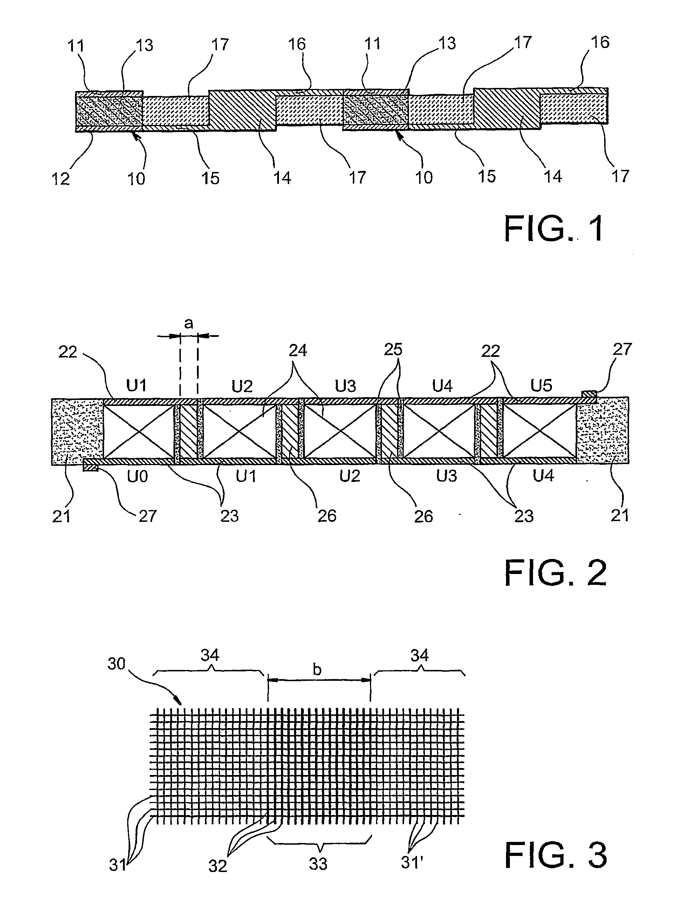

Comme illustré sur la figure 1, une telle pile à combustible est constituée d'un assemblage de plusieurs piles individuelles 10, disposées les unes à côté, ou derrière, les autres, comprenant chacune une anode 11 et une cathode 12, enserrant une couche électrolytique 13. Ces piles individuelles 10 sont séparées entre elles par des zones isolantes 17, et sont connectées entre elles par des pièces conductrices 14, une première extrémité 15 d'une pièce conductrice 14 étant connectée à la cathode 12 d'une première pile 10, et une deuxième extrémité 16 de cette pièce conductrice 14 étant reliée à l'anode 11 d'une autre pile 10 qui lui est adjacente.

Un tel assemblage est difficile à exécuter non seulement pour la réalisation à petite échelle des différentes piles individuelles 10 mais aussi pour la réalisation de leur connexion électrique. De plus, des problèmes d'étanchéité subsistent.

Pour remédier à ces inconvénients, le document référencé [2] propose un procédé de fabrication d'un assemblage d'éléments de base de piles à combustible formant plusieurs piles élémentaires, en déposant sur une trame isolante, en plusieurs étapes successives, différents composants sous forme de suspensions.

La figure 2 représente un tel assemblage d'éléments de base, une fois terminé. Tous les éléments fonctionnels de cet assemblage sont des parties déposées les unes après les autres sur et/ou dans une plaque en matériau en trame dont l'épaisseur correspond à l'épaisseur d'une couche de conducteur ionique. Cet assemblage comprend, tout d'abord, un joint périphérique 21, placé sur toute l'épaisseur de la plaque à la périphérie de celle-ci. Ce joint périphérique 21 est en matériau inerte chimiquement et isolant électroniquement et ioniquement. Les différentes piles élémentaires de cet assemblage sont constituées chacune d'une anode 22 placée sur une première surface de la plaque, une cathode 23 placée sur la surface opposée de la plaque et un conducteur ionique 24 situé entre l'anode 22 et la cathode 23, sur toute l'épaisseur de la plaque. L'anode 22 dépasse d'un côté du conducteur ionique 24 et la cathode 23 dépasse du conducteur ionique 24 du côté opposé à l'anode. De cette manière, chaque partie dépassante d'une anode 22 et d'une cathode 23 se trouve en regard, à l'épaisseur de la plaque près, d'une cathode 23 ou d'une anode 22 d'une pile voisine, exception faite pour l'anode 22 d'une première pile d'extrémité et la cathode 23 de l'autre pile d'extrémité. Un conducteur électronique 26, déposé dans toute l'épaisseur de la plaque, permet de relier l'anode 22 d'une pile de rangs n à la cathode 23 de la pile voisine de rang n + 1, qui est placée en regard de celle-ci, la tension Ui (o<i<5) de l'une étant reportée sur l'autre. Des couches isolantes verticales 25 séparent chaque conducteur électronique 26 des deux parties de conducteur ionique 24 qui lui sont adjacentes. La distance a entre deux couches isolantes verticales voisines 25 peut être de l'ordre de 5 millimètres. Un premier collecteur électronique 27 est placé sur l'anode 22 dépassant d'une première pile d'extrémité et un second collecteur 27 est placé sur la cathode 23 dépassant de l'autre pile d'extrémité.

Le document EP 0482 783 divulgue une membrane composée qui comporte un ou plusieurs domaines d'un conducteur ionique et un ou plusieurs domaines d'un conducteur électronique.

Les problèmes majeurs rencontrés dans l'élaboration de ce type de pile à combustible planaire sont d'une part l'étanchéité des interfaces matériaux conducteur ionique/conducteur électronique, et d'autre part les faibles valeurs de conductivité électronique obtenues dans les « traversées de courant ». Ces faibles valeurs de conductivité provoquent de fortes chutes ohmiques entraînant des pertes de performances et un échauffement de ces traversées (effet Joule).

L'invention a pour objet de résoudre de tels problèmes.

### EXPOSÉ DE L'INVENTION

L'invention concerne une pile à combustible planaire comportant un ensemble électrode-membrane-électrode, caractérisée en ce que la membrane comporte un tissu dont les fibres de chaîne sont des fibres continues en matériau isolant électrique et dont les fibres de trame sont alternativement des fibres en matériau isolant et des fibres en matériau conducteur électrique, pour former respectivement des zones isolantes et des zones conductrices.

Avantageusement les fibres en matériau isolant peuvent être en polymère ou en verre inerte. Les fibres en matériau conducteur électrique peuvent être des fibres de carbone ou des fibres d'acier inox.

Une telle pile présente, notamment, les avantages suivants :
- une simplification de fabrication en supprimant l'étape de dépôt des couches isolantes verticales,
- une augmentation de performance par l'apport d'un conducteur électronique massif dans les traversées électriques,
- une taille des conducteurs électroniques permettant d'accroître sur une même surface le nombre de paires d'électrodes, augmentant ainsi la tension de la pile.

L'invention concerne également un procédé de fabrication d'une pile à combustible planaire, qui comprend les étapes suivantes :
- découpe, à la forme souhaitée, d'un morceau de matériau,
- dépôt d'une couche de joint sur toute l'épaisseur de la périphérique de ce morceau de matériau en légère surépaisseur,
- dépôt d'un conducteur ionique dans toute l'épaisseur de ce morceau de matériau,
- dépôt des anodes sur une première surface du morceau de matériau ainsi rempli et des cathodes sur l'autre surface de celui-ci,
- dépôt de collecteurs électronique à une des deux extrémités de l'ensemble d'anodes et à l'autre extrémité de l'ensemble de cathodes,
caractérisé en ce que le morceau de matériau est un morceau de tissu dont les fibres de chaîne sont des fibres continues en matériau isolant électrique et les fibres de trame sont alternativement des fibres en matériau isolant et des fibres en matériau conducteur électrique pour former respectivement des zones isolantes et des zones conductrices.

Avantageusement on dépose un joint isolant de part et d'autre de chaque zone conductrice.

A cause de la structure tissée de ce morceau de tissu, les fibres sont en contact intime électrique, contrairement aux dispositifs de l'art connu où les grains conducteurs sont noyés dans un liant et où la continuité électrique n'est pas absolue. Ce morceau de tissu provoque donc une augmentation de la conductivité d'un facteur 2 à 10 ce qui permet d'améliorer les performances de la pile et de diminuer la taille des zones isolantes et donc celles des piles.

Les applications visées par un tel type de technologie de pile à combustible (monobloc ou polyéléments), sont des systèmes légers et portables, nécessitant des alimentations électriques de tension supérieure à 1 volt, et dans lesquels se posent les problèmes de poids et de formes.

Le combustible alimentant une pile, ainsi construite, peut être stocké sous forme de gaz comprimé à l'extérieur de la pile ou bien sous forme adsorbée dans des hydrures, qui peuvent être réalisés sous forme de feuilles d'hydrure au contact des anodes.

### BRÈVE DESCRIPTION DES DESSINS

La figure 1 illustre un premier dispositif de l'art connu.
La figure 2 illustre un second dispositif de l'art connu.
La figure 3 illustre une trame localement conductrice selon l'invention.
Les figures 4 à 6 illustrent respectivement les étapes du procédé de l'invention à la fois dans une vue en coupe transversale (figures 4A, 5A et 6A) et dans une vue de dessus (figures 4B, 5B et 6B).

### EXPOSÉ DÉTAILLÉ DE MODES DE RÉALISATION PARTICULIERS

Dans la réalisation de piles planaires juxtaposées de l'art connu, comme illustré sur la figure 2, on utilise une matrice poreuse que l'on remplit localement de matériau approprié à la fonction que doit jouer la zone remplie. Une telle solution présente des problèmes d'étanchéité aux interfaces des différentes zones. De plus, la conductivité électronique n'est pas obligatoirement élevée de par la structure même de la matière poreuse.

Pour pallier de tels inconvénients l'invention consiste à utiliser, à la place de la matrice poreuse, un tissu 30 de fibres d'un seul tenant. Comme illustré sur la figure 3, les fibres de chaîne 31 sont continues d'un bout à l'autre de la pile (il n'y a pas d'interface, donc pas de perte de place) et sont en un matériau isolant électrique. Les fibres de trame sont réalisées alternativement par des fibres isolantes 31' ou des fibres conductrices 32 de manière à réaliser les différentes fonctions d'un élément de pile et juxtaposer les éléments pour constituer une pile.

Les fibres isolantes 31 et 31' sont par exemple des fibres polymères ou en verre inerte chimiquement. Les fibres conductrices 32 sont par exemple des fibres de carbone ou d'acier inox.

Ces fibres conductrices 32 forment, comme illustré sur la figure 3, des zones conductrices 33 afin d'assurer localement sur une largeur b une conductivité électronique dans l'épaisseur de la trame. Cette largeur b peut être de l'ordre de 2 millimètres, pour une surface de tissu d'environ 1 mètre carré, et une épaisseur comprise entre 20 micromètres et 100 micromètres.

Comme illustré sur la figure 3, ce tissu 30 peut être réalisé par une toile classique tissée à angle droit. Le nombre de fibres et l'angle de tissage peuvent varier en fonction de la géométrie choisie pour la pile.

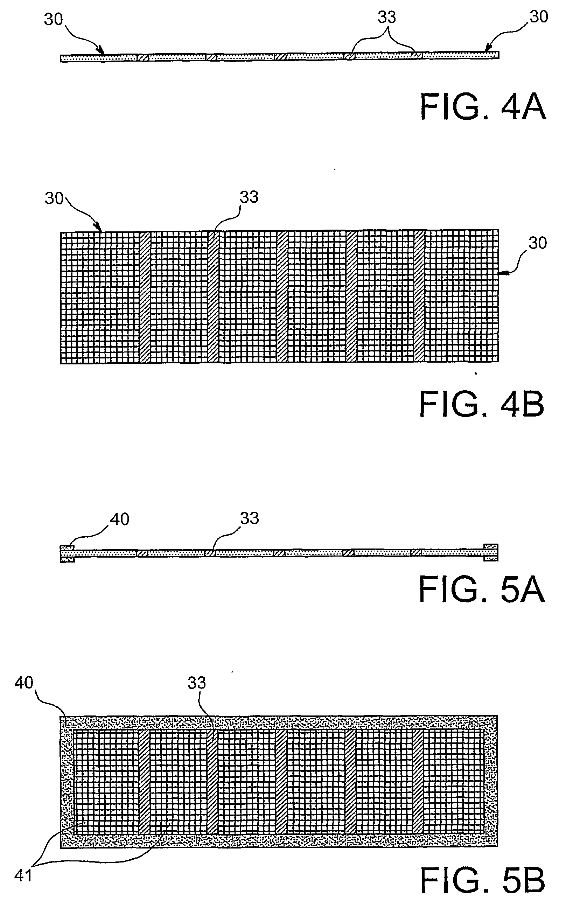

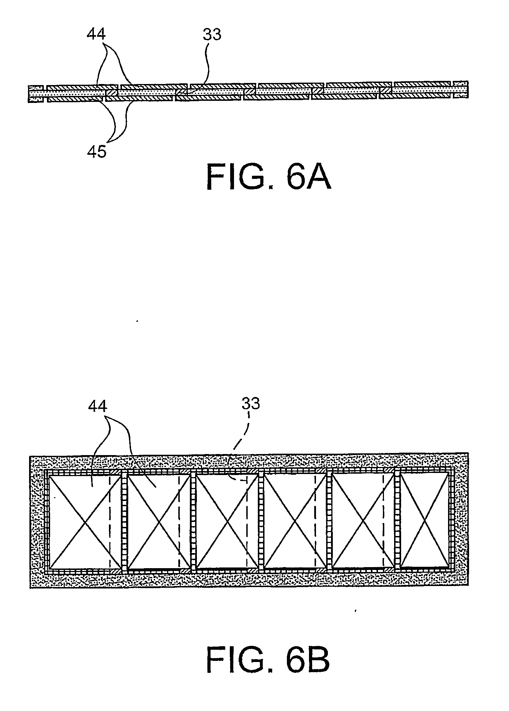

Le procédé de fabrication d'une telle pile à combustible planaire comprend les étapes suivantes :
- découpe, à la forme souhaitée, du morceau de tissu 30 qui comporte des zones isolantes 34 séparées par des zones conductrices 33,
- dépôt d'une couche de joint 40 sur toute l'épaisseur de la périphérique de ce morceau de tissu 30 en légère surépaisseur,
- dépôt d'un conducteur ionique 41 dans toute l'épaisseur de ce morceau de tissu 30
- dépôt des anodes 44 sur une première surface du morceau de tissu ainsi rempli et des cathodes 45 sur l'autre surface,
- dépôt (non illustré sur les figures 4 à 6) de collecteurs électroniques à une des deux extrémités de l'ensemble d'anodes 44, et à l'autre extrémité de l'ensemble de cathodes 45.

Les différentes étapes de dépôt prévues ci-dessus sont avantageusement réalisées à l'aide de masques.

Pour améliorer le fonctionnement, en évitant toute fuite ionique, il est possible de déposer des joints isolants de part et d'autre de chaque zone conductrice 33.

Ainsi suivant ces étapes illustrées sur figures 4 à 6 il est possible de réaliser des piles à combustibles planaires possédant des performances supérieures à celle obtenues par les piles décrites dans le document référencé [2], et une tenue mécanique renforcée par la suppression d'une interface conducteur ionique/conducteur électronique, limitant également les risques de fuites internes pouvant provoquer des mélanges hydrogène/oxygène.

La structure de pile de l'invention présentée ci-dessus n'est qu'un exemple. L'invention peut s'appliquer aux micro-piles par exemple matricées sur un support ou à toutes les piles qui possèdent sur un même plan, des surfaces conductrices électriques et des surfaces conductrices ioniques séparées.

### REFERENCES

- [1]: US 5, 863,672
- [2]: FR 2819107

## Revendications

1. Pile à combustible planaire comportant un ensemble électrode-membrane-électrode, **caractérisée en ce que** la membrane comporte un tissu dont les fibres de chaîne (31) sont des fibres continues en matériau isolant électrique et dont les fibres de trame sont alternativement des fibres en matériau isolant (31') et des fibres en matériau conducteur électrique (32), pour former respectivement des zones isolantes (34) et des zones conductrices (33).

2. Pile à combustible selon la revendication 1, dans laquelle les fibres en matériau isolant (31, 31') sont en polymère ou en verre inerte.

3. Pile à combustible selon la revendication 1, dans laquelle les fibres en matériau conducteur électrique (32) sont des fibres de carbone ou des fibres d'acier inox.

4. Procédé de fabrication d'une pile à combustible planaire, qui comprend les étapes suivantes :
- découpe, à la forme souhaitée, d'un morceau (30) de matériau,
- dépôt d'une couche de joint (40) sur toute l'épaisseur de la périphérique de ce morceau de matériau en légère surépaisseur,
- dépôt d'un conducteur ionique (41) dans toute l'épaisseur de ce morceau de matériau,
- dépôt des anodes (44) sur une première surface du morceau de matériau ainsi rempli et des cathodes (45) sur l'autre surface,
- dépôt de collecteurs électronique à une des deux extrémité de l'ensemble d'anodes (44) et à l'autre extrémité de l'ensemble de cathodes (45), **caractérisé en ce que** le morceau de matériau est un morceau de tissu dont les fibres de chaînes (31) sont des fibres continues en matériau isolant électrique et dont les fibres de trame sont alternativement des fibres en matériau isolant (31') et des fibres en matériau conducteur électrique (32) pour former respectivement des zones isolantes (34) et des zones conductrices (33).

5. Procédé selon la revendication 4, dans lequel on dépose des joints isolants de part et d'autre des zones conductrices (33) du tissu (30).

## Claims

1. A planar fuel cell including an electrode-membrane-electrode assembly, **characterized in that** the membrane includes a fabric, the warp fabric (31) of which are continuous fibers in an electrically insulating material and the weft fibers of which alternately are fibers in insulating material (31') and fibers in electrically conducting material (32), so as to form insulating areas (34) and conducting areas (33), respectively.

2. The fuel cell according to claim 1, wherein the fibers in insulating material (31, 31') are in polymer or in inert glass.

3. The fuel cell according to claim 1, wherein the fibers in electrically conducting material (32) are carbon fibers or stainless steel fibers.

4. A method for making a planar fuel cell, which comprises the following steps:
- cutting out, with the desired shape, a piece (30) of material,
- depositing a seal layer (40) over the whole thickness of the periphery of this piece of material with a slight excess thickness,
- depositing a ion conductor (41) in the whole thickness of this piece of material,
- depositing anodes (44) on a first surface of the thereby filled piece of material and cathodes (45) on the other surface,
- depositing electron collectors at one of the two ends of the assembly of anodes (44) and at the other end of the assembly of cathodes (45), **characterized in that** the piece of material is a piece of fabric, the warp fibers (31) of which are continuous fibers in electrically insulating material and the weft fibers of which are alternately fibers in insulating material (31') and fibers in electrically conducting material (32) to form insulating areas (34) and conducting areas (33), respectively.

5. The method according to claim 4, wherein insulating gaskets are deposited on either side of the conducting areas (33) of the fabric (30).

## Patentansprüche

1. Planares Brennstoffelement mit einem Elektrode-Membran-Elektrode-Aggregat, **dadurch gekennzeichnet, dass** die Membran ein Gewebe umfasst, dessen Kettfasern bzw. -fäden (31) kontinuierliche Fasern bzw. Fäden aus einem elektrisch isolierenden Material und dessen Schussfasern bzw. -fäden alterierend abwechselnd Fasern bzw. Fäden aus einem isolierenden Material (31') und Fasern bzw. Fäden aus einem elektrisch leitenden Material (32) sind, zur Bindung isolierender Zonen (34) bzw. leitender Zonen (33).

2. Brennstoffelement nach Anspruch 1, bei welchem die Fasern bzw. Fäden aus isolierendem Material (31, 31') aus einem Polymermaterial oder aus einem inerten Glas bestehen.

3. Brennstoff-Element nach Anspruch 1, bei welchem die Fasern bzw. Fäden aus elektrisch leitendem Material (32) Kohlenstoff-Fasern bzw. -fäden oder Fasern bzw. Fäden aus rostfreiem Inox-Stahl sind.

4. Verfahren zur Herstellung eines Planar-Brennstoff-Elements, wobei das Verfahren die folgenden Stufen bzw. Schritte umfasst:
-- Zuschneiden eines Material-Werkstücks auf die gewünschte Form,
-- Abscheiden einer Verbindungsschicht (40) über die gesamte Dicke des Umfangs des Material-Werkstücks, mit einer leichten Überdicke,
-- Abscheiden eines Ionenleiters (41) in der gesamten Dicke des Material-Werkstücks,
-- Abscheiden von Anoden (44) auf einer ersten Oberfläche des so gefüllten Material-Werkstücks, sowie Abscheiden von Kathoden (45) auf der anderen Oberfläche,
-- Abscheiden von Elektronenkollektoren an einem der beiden Enden des
Anodenaggregats (44) und an dem anderen Ende des Kathodenaggregats (45),
**dadurch gekennzeichnet, dass** das Material-Werkstück ein Gewebestück ist, dessen Kettfasern bzw. -fäden (31) kontinuierliche Fasern bzw. Fäden aus einem elektrisch isolierenden Material und dessen Schussfasern bzw. -fäden alterierend abwechselnd Fasern bzw. Fäden aus einem isolierenden Material (31') und Fasern bzw. Fäden aus einem elektrisch leitenden Material (32) sind, zur Bildung isolierender Zonen (34) bzw. leitender Zonen (33).

5. Verfahren nach Anspruch 4, bei welchem man isolierende Verbindungen zu beiden Seiten der leitenden Zonen (33) des Gewebes (30) abscheidet.
